(19) Europäisches Patentamt
European Patent Office
Office européen des brevets

(11) **EP 2 128 563 A1**

(12) **EUROPÄISCHE PATENTANMELDUNG**

(43) Veröffentlichungstag:
**02.12.2009 Patentblatt 2009/49**

(51) Int Cl.:
***G01B 21/08*** (2006.01)

(21) Anmeldenummer: **08009910.4**

(22) Anmeldetag: **30.05.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **Plast-Control GmbH**
**42899 Remscheid (DE)**

(72) Erfinder:
• **Konermann, Stefan**
**42897 Remscheid (DE)**

• **Günther, Michael**
**50859 Köln-Widdersdorf (DE)**
• **Pulch, Roland**
**42109 Wuppertal (DE)**
• **Bartel, Andreas**
**42119 Wuppertal (DE)**
• **Stein, Markus**
**58285 Gevelsberg (DE)**

(74) Vertreter: **Wiebusch, Manfred**
**Ter Meer Steinmeister & Partner GbR**
**Artur-Ladebeck-Strasse 51**
**33617 Bielefeld (DE)**

(54) **Verfaren zur Messung des Dickenprofils eines Folienschlauches**

(57) Verfahren zur Messung des Dickenprofils einer in einer Blasfolienanlage mit drehbarem Abzug (14) hergestellten Folie, bei dem

- ein flachgelegter Folienschlauch (16) abgetastet wird, indem Einzelmessungen an über die Breite des Folienschlauches (16) verteilten Meßpositionen (i) ausgeführt werden und bei jeder Einzelmessung die Gesamtdicke zweier an der Meßposition übereinander liegender Segmente des Folienschlauches gemessen wird, und

- aus den erhaltenen Meßwerten für eine eine Anzahl von Einzelmessungen, die größer ist als die Anzahl (n) der Meßpositionen, das Dickenprofil (P(j)) berechnet wird,

gekennzeichnet durch die folgenden Schritte:

- Trainieren eines neuronalen Netzes (26) mit Meßwerten für die Gesamtdicken, die in simulierten oder realen Meßprozessen mit bekannten Dickenprofilen erhalten werden, und

- Eingeben der durch die Abtastung des Folienschlauches (16) erhaltenen Meßwerte in das neuronale Netz (26) zur Berechnung des Dickenprofils.

*Fig. 1*

**Beschreibung**

Die Erfindung betrifft ein Verfahren zur Messung des Dickenprofils einer in einer Blasfolienanlage mit drehbarem Abzug (14) hergestellten Folie, bei dem

- ein flachgelegter Folienschlauch (16) abgetastet wird, indem Einzelmessungen an über die Breite des Folienschlauches (16) verteilten Meßpositionen (i) ausgeführt werden und bei jeder Einzelmessung die Gesamtdicke zweier an der Meßposition übereinander liegender Segmente (28) des Folienschlauches gemessen wird, und
- aus den erhaltenen Meßwerten für eine eine Anzahl von Einzelmessungen, die größer ist als die Anzahl der Meßpositionen, das Dickenprofil berechnet wird,

Ein Verfahren dieser Art ist aus EP 1 207 368 A2 bekannt.

Bei der Blasfolienherstellung weist die aus einem ringförmigen Extrusionswerkzeug extrudierte und mittels Innenluft aufgeblasene Folienblase auf ihrem Umfang kein völlig einheitliches Dickenprofil auf, da Unregelmäßigkeiten des Extrusionswerkzeugs und/oder des Kühlsystems zu einer gewissen Verteilung von Dick- und Dünnstellen führen. Wenn die Folienblase dann nach dem Aushärten zu einem Schlauch flachgelegt und auf einen Coil aufgewikkelt wird, so käme auf dem Coil ohne weitere Gegenmaßnahmen Dickstelle auf Dickstelle und Dünnstelle auf Dünnstelle zu liegen, so daß sich die Dikkenabweichungen in unerwünschter Weise akkumulieren würden. Aus diesem Grund wird zum Flachlegen des Folienschlauches ein Abzug verwendet, der relativ zu Folienblase drehbar ist. Durch Variieren der Winkelstellung des Abzugs, beispielsweise durch oszillierende Rotation desselben, läßt sich dann erreichen, daß sich in dem flachgelegten Schlauch die Dickstellen und Dünnstellen ständig gegeneinander verschieben, so daß man auf dem Coil einen einheitlicheren Wickel erhält.

Darüber hinaus ist man natürlich bestrebt, durch Eingriff in das Extrusionswerkzeug oder das Kühlsystem das Dickenprofil so zu regeln, daß die Dickenabweichungen auf ein Minimum reduziert werden. Dafür ist es erforderlich, fortlaufend das Istprofil der Folie zu überwachen.

Zur Messung des Dickenprofils kann ein Meßkopf verwendet werden, der um die Folienblase umläuft, bevor diese flachgelegt wird, so daß der Meßkopf jeweils nur eine einzige Lage der Folie mißt. Nachteilig dabei ist jedoch, daß der Meßkopf nur auf der Außenseite der Folienblase angeordnet sein kann und deshalb in der Lage sein muß, eine Dickenmessung nur von einer einzigen Seite der Folie her vorzunehmen.

Genauere Dickenmessungen lassen sich mit Meßköpfen erreichen, die zwei auf entgegengesetzten Seiten der Folie liegende Teile aufweisen.

Bei dem in der eingangs genannten Druckschrift beschriebenen Verfahren wird ein Meßkopf der letztgenannten Art eingesetzt. Die Messung erfolgt dann durch Abtastung des Folienschlauches nach dem Flachlegen. Dabei entsteht jedoch das Problem, daß man bei der Dickenmessung nicht unmittelbar das Dickenprofil der Folie erhält, da zu jedem Zeitpunkt nur die Summe zweier an der Meßstelle übereinander liegender Foliensegmente gemessen wird. Wenn bei einer Abtastung des Folienschlauches n Einzelmessungen durchgeführt werden, so werden dadurch 2n Segmente des Folienschlauches definiert, für die jeweils die zugehörige Dicke P(j) zu bestimmen ist. Wenn man 2n Einzelmessungen vornimmt, erhält man ein Gleichungssystem mit 2n Gleichungen und 2n Unbekannten. Dieses Gleichungssystem läßt sich jedoch nicht exakt lösen, da die einzelnen Gleichungen nicht linear unabhängig sind.

Bei dem bekannten Verfahren wird deshalb eine deutlich größere Anzahl von Messungen vorgenommen, so daß man eine entsprechend größere Anzahl von Gleichungen und somit ein überbestimmtes Gleichungssystem erhält, das sich dann nach der Methode der kleinsten Abstandsquadrate näherungsweise lösen läßt.

Für eine genaue und stabile Regelung des Folienprofils ist es wesentlich, daß zwischen der Extrusion eines Abschnitts des Folienschlauches und der Messung des Dickenprofils dieses Abschnitts möglichst wenig Zeit vergeht, so daß Dickenabweichungen möglichst unverzüglich korrigiert werden können. Aufgabe der Erfindung ist es, ein alternatives Verfahren zur Messung der Foliendicke sowie eine Vorrichtung zur Durchführung dieses Verfahrens anzugeben.

Diese Aufgabe wird erfindungsgemäß mit den in den unabhängigen Patentansprüchen angegebenen Merkmalen gelöst. Nach dem Grundgedanken der Erfindung erfolgt die Berechnung des Dickenprofils mit Hilfe eines neuronalen Netzes.

Wie sich gezeigt hat, läßt sich schon ein relativ einfach strukturiertes und daher schnelles und kostengünstiges neuronales Netz so trainieren, daß eine robuste und genaue Bestimmung des Dickenprofils auf der Grundlage einer verhältnismäßig geringen Anzahl von Meßwerten ermöglicht wird. Ein zusätzlicher Vorteil besteht darin, daß mit Hilfe des neuronalen Netzes auch systematische Fehler der Meßapparatur korrigiert werden können, wenn das Netz für eine spezifische Meßapparatur trainiert wird.

Vorteilhafte Ausgestaltungen und Weiterbildungen der Erfindung sind in den Unteransprüchen angegeben.

Im folgenden wird ein Ausführungsbeispiel anhand der Zeichnung näher erläutert.

Es zeigen:

Fig. 1        eine Prinzipskizze einer Blasfolienanlage mit einer zur Durchführung des erfindungsgemäßen Verfahrens ge- eignete Vorrichtung zur Messung des Dickenprofils;

Fig. 2        einen schematischen Schnitt durch einen flachgelegten Folienschlauch in einer ersten Konfiguration;

Fig. 3        den Folienschlauch nach Fig. 2 in einer um k Segmente verdrehten Konfiguration;

Fig. 4 und 5   Prinzipskizzen neuronaler Netze;

Fig. 6        einen Graphe einer Aktivierungsfunktion;

Fig. 7        ein Diagramm für unterschiedliche Rotationsgeschwin- digkeiten der Folienblase; und

Fig. 8        ein Blockdiagramm eines Verfahrens zum trainieren des neuronalen Netzes.

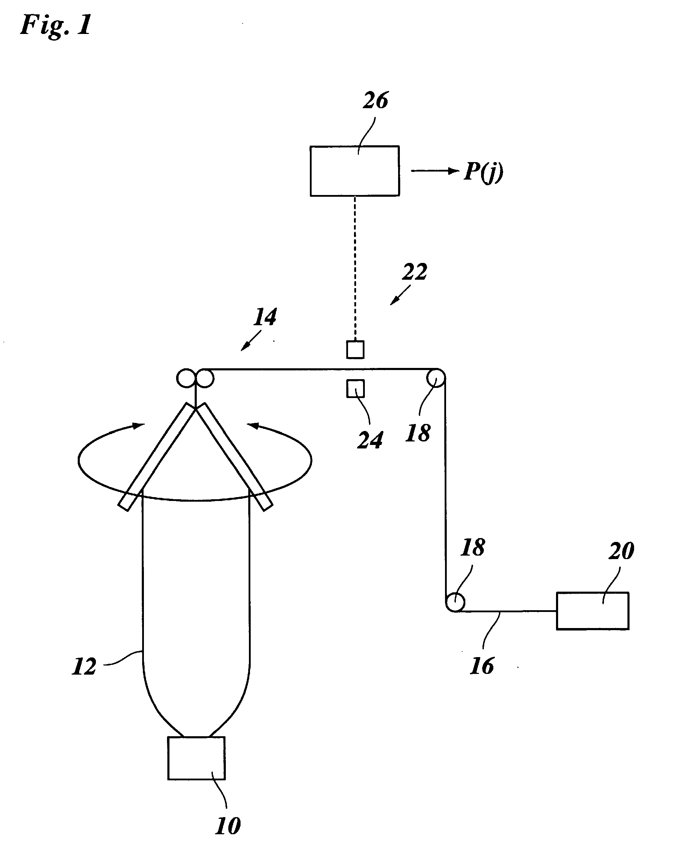

In Fig. 1 ist schematisch eine Folienblasanlage gezeigt, die wie üblich ein Extrusionswerkzeug 10 aufweist, aus dem vertikal nach oben eine schlauchförmige Folienblase 12 extrudiert wird, die mit Innenluft aufgeblasen wird, so daß sich die Folie dehnt und verdünnt, bis sie schließlich im oberen Bereich der Folienblase erstarrt. Am oberen Ende wird die Folienblase 12 dann mit Hilfe eines um die vertikale Achse der Folienblase rotierenden oder reversierenden Abzugs 14 flachgelegt. Auf diese Weise erhält man einen flachgelegten, also zweilagigen Folienschlauch 16, der über Umlenkrollen 18 zu einer nur schematisch angedeuteten Schneid- und Wickelstation 20 läuft, wo der Schlauch in eine oder zwei einlagige Folienbahnen aufgetrennt und auf einen Coil gewickelt wird. Gleich nach dem Austritt aus dem Abzug 14 läuft der Folienschlauch 16 durch eine Meßstation 22, in der die Gesamtdicke des Folienschlauches mit Hilfe eines quer zu dem Folienschlauch beweglichen Meßkopfes 24 abgetastet wird. Der Meßkopf 24 weist zwei Teile (z.B. einen Sender und einen Empfänger) auf, die ober- und unterhalb des Folienschlauches 16 angeordnet sind. Aufgrund dieses Aufbaus des Meßkopfes 24 kann die Messung erst an dem flachgelegten Folienschlauch 16 und noch nicht an der Folienblase 12 erfolgen. Andererseits soll die Messung jedoch bereits vor der Schneid- und Wickelstation 20 erfolgen, damit die Meßergebnisse möglichst frühzeitig für eine Regelung des Dickenprofils der Folie zur Verfügung stehen.

Die in der Meßstation 22 erhaltenen Meßergebnisse werden einem neuronalen Netz 26 zugeführt, mit dem das Dickenprofil P(j) der Folienblase berechnet wird. Das neuronale Netz 26 kann durch spezialisierte Hardware oder durch eine geeignet programmierte Vielzweck-Datenverarbeitungsanlage, vorzugsweise mit Parallelarchitektur, gebildet werden.

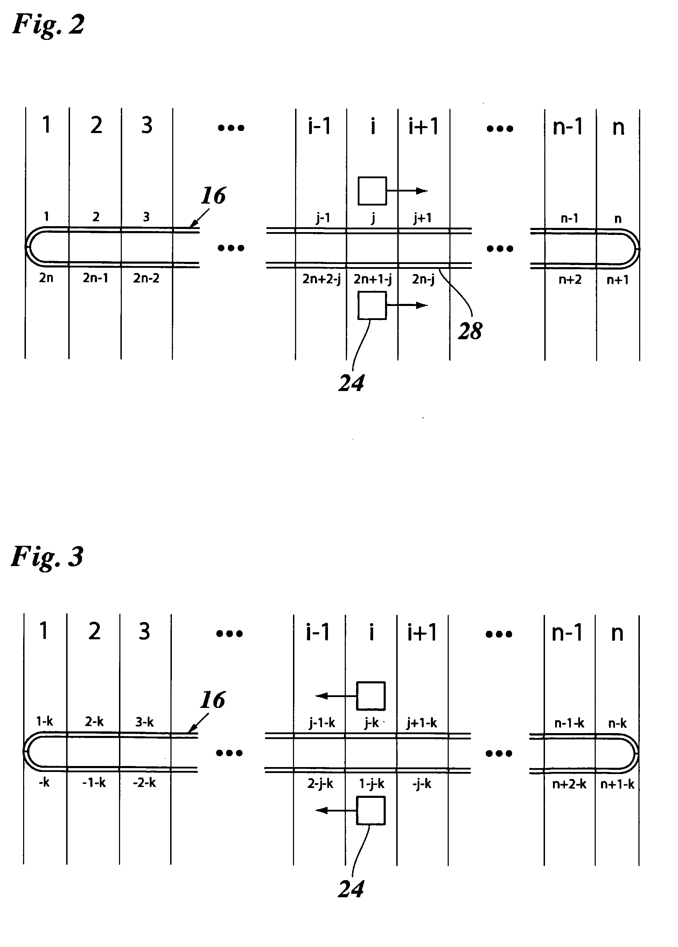

In Fig. 2 ist ein schematischer Schnitt durch den Folienschlauch 16 an der Stelle der Meßstation 22 gezeigt. Die oberhalb und unterhalb des Folienschlauches 16 liegenden Teile des Meßkopfes 24 bewegen sich synchron in Breitenrichtung des Folienschlauches, im gezeigten Beispiel nach rechts, und messen die Gesamtdicke des zweilagigen Folienschlauches an n Meßpositionen, die gleichmäßig über die Breite des Folienschlauches verteilt und hier mit dem Index i bezeichnet sind. Die n Meßpositionen definieren, da der Schlauch zweilagig ist, in dem Schlauch 2n Segmente 28, die hier mit dem Index j bezeichnet sind. Da diese Segmente innerhalb des Schlauches zyklisch aufeinanderfolgen, ist es zweckmäßig, die Indizes i und j als ganze Zahlen modulo 2n zu definieren, d.h., 2n = 0, 2n + 1 = 1, 2n -1 = -1, etc.

Das gesuchte Dickenprofil P(j) wird repräsentiert durch die Dickenwerte für jedes der 2n Segmente 28 des Schlauches.

In der in Fig. 2 gezeigten Konfiguration liegt das Segment 1 des Schlauches über dem Segment 2n (oder 0), das Segment 2 über dem Segment 2n-1, etc., allgemein also das Segment j über dem Segment 2n+1-j, und die Indizes i und j stimmen für die oberen Segmente des Folienschlauches, d.h., die Segmente 1 bis n, überein.

Fig. 3 zeigt denselben Folienschlauch 16 in einer zweiten Konfiguration, in der er - aufgrund der Drehung des Abzugs 14 - um k Segmente verdreht ist. An der Meßposition i=1 befindet sich somit nicht mehr das Segment j=1, sondern vielmehr das Segment j=1-k. Entsprechend sind auch alle anderen Segmente um k verschoben, wenn k positiv ist, auf der Oberseite des Folienschlauches nach rechts und auf der Unterseite nach links.

Durch wiederholte Abtastung, bei der sich der Meßkopf 24 beispielsweise abwechselnd nach rechts und nach links über die Breite des Folienschlauches bewegen kann, erhält man eine Folge von Meßwerten, die jeweils die Summe der Dicken zweier Segmente angeben. In der Praxis wird die Zeit $T_M$, die für einen Abtastlauf, d.h., eine vollständige Bewegung des Abtastkopfes 24 über die Breite des Folienschlauches (also für n Messungen) benötigt wird, deutlich kleiner sein als die Zeit $T_F$, die der Abzug 14 für eine Umdrehung bzw. einen halben Oszillationszyklus benötigt. Während einer Folge von unmittelbar aufeinanderfolgenden Einzelmessungen, beispielsweise während eines Meßlaufes oder eines Teils desselben, kann daher die Konfiguration des Folienschlauches als konstant betrachtet werden. In aufeinanderfolgenden Meßläufen werden sich jedoch die Segmente des Folienschlauches nach und nach gegeneinander verschieben, so daß man Meßwerte für unterschiedliche Paarungen von Foliensegmenten erhält.

In der Praxis betraägt $T_M$ beispielsweise 20 bis 30s, und $T_F$ beträgt beispielsweise 300 bis 3000s. Diese Werte und die Anzahl und 2n der Segmente des Folienschlauches sollten vorzugsweise so aufeinander abgestimmt werden, daß sich die übereinanderliegenden Segmente des Folienschlauches während eines Meßlaufes, also innerhalb der Zeit $T_M$, um mindestens ein Segment gegeneinander verschieben.

Die Aufgabe des neuronalen Netzes (26) besteht nun darin, aus diesen Meßwerten, die auch Meßwerte für unterschiedliche Konfigurationen des Folienschlauches und damit für unterschiedliche Segmentpaarungen einschließen, möglichst genaue Werte für die Dicken P(j) der einzelnen Segmente und damit das Dickenprofil der Folie zu bestimmen.

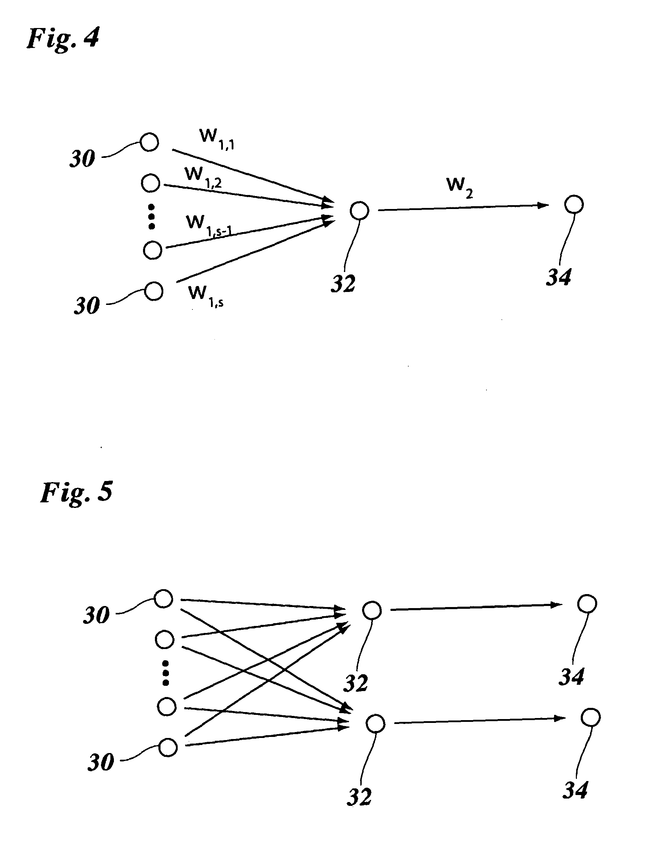

In Fig. 4 ist ein einfaches Beispiel eines neuronalen Netzes dargestellt. Wie üblich weist das Netz eine Anzahl von Neuronen 30, 32, 34 auf, die in mehreren Schichten, im gezeigten Beispiel in drei Schichten angeordnet sind. Eine erste Schicht wird durch Eingangsneuronen 30 gebildet, denen die Meßwerte zugeführt werden. Die Anzahl der Eingangsneuronen 30 muß größer sein als n und sollte vorzugsweise mindestens 2n betragen, so daß das neuronale Netz in der Lage ist, 2n Einzelmessungen, also die Messungen aus zwei aufeinanderfolgenden Meßläufen, parallel zu verarbeiten.

Eine zweite Schicht des neuronalen Netzes ist eine sogenannte verborgene Schicht und wird durch Neuronen 32 gebildet, und die dritte Schicht wird durch Ausgangsneuronen 34 gebildet. Im gezeigten Beispiel weist die verborgene Schicht nur ein einziges Neuron 32 auf, und die dritte Schicht weist nur ein einziges Ausgangsneuron 34 auf. Folglich kann mit Hilfe dieses Netzes als Ergebnis nur ein einziger Wert erhalten werden (der Wert des Ausgangsneurons 34), der die Dicke eines einzelnen Segments des Folienschlauches repräsentieren kann. Für ein vollständiges Dickenprofil des Folienschlauches mit 2n Segmenten werden folglich zwei 2n neuronale Netze der in Fig. 4 gezeigten Art benötigt. Diese 2n Netze können jedoch auch als ein einzelnes größeres Netz betrachtet werden. Für den einfachen Fall eines Netzes mit zwei Ausgangsneuronen 34 ist dies schematisch in Fig. 5 dargestellt.

In Fig. 4 ist jedes der Eingangsneuronen 30 mit dem verborgenen Neuron 32 durch ein Gewicht $w_{1,1} \ldots w_{1,s}$ verknüpft (s = 1, ..., 2n). Das Neuron 32 ist mit dem Ausgangsneuron 34 durch ein Gewicht $w_2$ verknüpft.

Wenn $u_i$ (i = 1, ..., 2n) ein Satz von Meßwerten ist, die den Eingangsneuronen 30 zugeführt werden, so wird der Wert v des Neurons 32 nach der folgenden Formel berechnet:

$$v = g_1 \left( \Sigma w_{1,i}\, u_i + b_i \right) \tag{1}$$

Darin $g_1$ eine sogenannte Aktivierungsfunktion, $b_i$ sind sogenannte Schwellenwerte und i ist der Summationsindex.

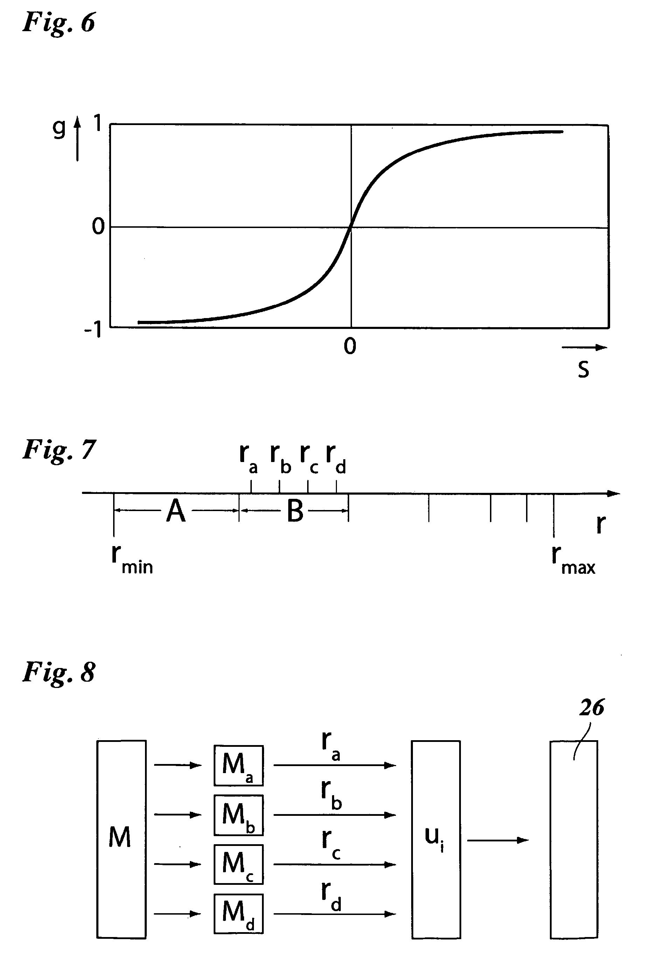

Ein Beispiel für eine geeignete Aktivierungsfunktion ist eine Tangens-Hyperbolikus-Funktion, deren Graph in Fig. 6 dargestellt ist. Dort ist der Wert g der Aktivierungsfunktion in Abhängigkeit von der Summe S angegeben, die dem Summenausdruck in Gleichung (1) entspricht. Man sieht, daß die Summe S sowohl positive als auch negative Werte annehmen kann. Dabei wird unterstellt, daß die Meßwerte $u_i$ jeweils die Abweichungen von der mittleren Foliendicke oder Solldicke angeben und somit ebenfalls positiv oder negativ sein können. Der Wertebereich der Aktivierungsfunktion ist das Intervall [-1, 1]. Da diese Funktion stetig (und differenzierbar) ist, kann g jeden Wert innerhalb dieses Intervalls annehmen.

Im allgemeinen Fall eines neuronalen Netzes, d.h., eines Netzes mit mehreren Neuronen in der verborgenen Schicht, wird der Wert jedes verborgenen Neurons 32 durch eine Formel von der Form der Formel (1) bestimmt, jedoch mit anderen Gewichten (die Gesamtheit der Gewichte w1 bildet dann eine Matrix). Der Wert P(j) jedes Ausgangsneurons wird nach einer Formel berechnet, die zu der Formel (1) analog ist. Da in dem hier betrachteten Beispiel jedoch nur ein einziges verborgenes Neuron 32 und nur ein einzige Ausgangsneuron 34 vorhanden ist, reduziert sich die Formel für den Wert des Ausgangsneurons 34 auf:

$$P(j) = g_2 \left( w_2\, v + b_2 \right) \tag{2}$$

Darin ist $g_2$ wieder eine Aktivierungsfunktion, und $b_2$ ist ein Schwellenwert. Die Aktivierungsfunktion $g_2$ kann hier auch eine lineare Funktion (Polynom ersten Grades) sein.

Wie in der Theorie neuronaler Netze allgemein bekannt ist, müssen die Gewichte $w_{1,i}$, $w_2$ und die Schwellenwerte $b_{1,i}$ und $b_2$ dadurch bestimmt werden, daß das neuronale Netz anhand bekannter Resultate trainiert wird. Zum Trainieren des Netzes wird im vorliegenden Fall eine Anzahl bekannter (realer oder fiktiver) Dickenprofile benötigt. Für jedes dieser Profile wird dann der in Fig. 1 bis 3 dargestellte Meßprozeß ausgeführt oder simuliert, mit fest vorgegebenen Werten $T_M$ und $T_F$.

Bei der Simulation wird in jedem der 2n Segmente des Folienschlauches (Fig. 2) der durch das Dickenprofil angegebene Wert P(j) zugeordnet, und für jede Position i des Meßkopfes 24 wird die Summe aus den Dicken der beiden übereinanderliegenden Segmente berechnet und dem neuronalen Netz als fiktiver Meßwert $u_i$ zur Verfügung gestellt. Dabei wird auch berücksichtigt, daß sich im Lauf der aufeinanderfolgenden Messungen die Segmente gegeneinander verschieben, wie in Fig. 3 dargestellt ist.

Die Gewichte und die Schwellenwerte sind dann so zu berechnen, daß das Netz möglichst der für jedes der zum Training verwendeten Dickenprofile an jedem Ausgangsneuron 34 möglichst genau die Dicke P(j) des Segments j liefert, das diesem Neuron zugeordnet ist, wenn den Eingangsneuronen 30 die entsprechenden fiktiven Meßwerte $u_i$ zugeführt werden. In der Theorie der neuronalen Netze sind verschiedene Algorithmen zur Berechnung der Gewichte und der Schwellenwerte bekannt. Diese Algorithmen sollen hier nicht näher erläutert werden.

Es versteht sich, daß anstelle des hier beschriebenen, relativ einfach aufgebauten neuronalen Netzes auch komplexere Netze verwendet werden können, beispielsweise Netze mit mehreren Neuronen in der verborgenen Schicht oder auch Netze mit zwei oder mehr verborgenen Schichten.

Das oben beschriebene Verfahren zum Trainieren des neuronalen Netzes ist im Prinzip von der speziellen Meßapparatur unabhängig. Es genügt daher, ein trainiertes Netz zur Verfügung zu stellen, das dann für alle Meßapparaturen verwendet werden kann, die mit den gleichen Werten von $T_M$, $T_F$ und n betrieben werden.

Es ist jedoch auch möglich, zum Trainieren des neuronalen Netzes reale Meßwerte zu verwenden, die mit dem Meßkopf 24 an einem realen Folienschlauch gemessen werden, in Verbindung mit Profilen, die nach Auftrennen des Folienschlauches an der einlagigen Folie aufgenommen wurden. Wenn das neuronale Netz dann an der Meßapparatur eingesetzt wird, mit der auch die Trainingsdaten gewonnen wurden, so werden durch das neuronale Netz auch systematische Fehler der Meßapparatur eliminiert.

In der Praxis wird es oft erforderlich sein, je nach Art des Blasprozesses, Abmessungen und Beschaffenheit des Folienschlauches und gewünschter Genauigkeit bei der Messung des Dickenprofils mit unterschiedlichen Abtastgeschwindigkeiten des Meßkopfes 24 und auch mit unterschiedlichen Reversierungs- oder Rotationsgeschwindigkeiten des Abzugs 14 zu arbeiten, so daß die Dauer $T_F$ der Folienreversierung und die Dauer $T_M$ eines Meßlaufes als variable Parameter zu betrachten sind. Grundsätzlich ist es möglich, für jede Kombination dieser Parameter ein spezifisches neuronales Netz zu trainieren, d.h., einen spezifischen Satz von Gewichten und Schwellenwerten zu bestimmen. Je nach gewünschter Genauigkeit kann dabei noch die Zahl der möglichen Parameterkombinationen relativ groß werden.

Es ist auch möglich, für alle in Frage kommenden Parameter oder Parmeterkominationen ein einheitliches Netz zu trainieren, bei dem für jeden Parameter ein entsprechendes Eingangsneuron vorgesehen ist.

Im folgenden wird eine andere Möglichkeit beschrieben, ein robustes Netz mit relativ geringer Komplexität zu trainieren.

Zunächst ist zu bemerken, daß für ein angemessenes Training des neuronalen Netzes nicht die Dauer $T_F$ des Reversierungsprozesses als solche und auch nicht die Dauer $T_M$ des Meßlaufes als solche von Bedeutung ist, sondern lediglich das Verhältnis $r = T_M/T_F$. Dieses Verhältnis ist zugleich das Verhältnis Abtastgeschwindigkeit/Reversierungsgeschwindigkeit und soll deshalb im folgenden als Geschwindigkeitsverhältnis r bezeichnet werden. Dieses Geschwindigkeitsverhältnis kann in der Praxis verschiedene Werte innerhalb eines Intervalls [$r_{min}$, $r_{max}$] annehmen, wie in Fig. 7 dargestellt ist. Dieses Intervall wird nun in verschiedene Teilintervalle A, B, ... aufgeteilt und für jedes dieser Teilintervalle wird ein spezielles neuronales Netz trainiert. Wie Fig. 7 zeigt, haben die Teilintervalle A, B, ... unterschiedliche Größen. Damit kann dem Umstand Rechnung getragen werden, daß die Sensitivität, mit der das neuronale Netz auf Schwankungen des Geschwindigkeitsverhältnisses r reagiert, seinerseits von dem Geschwindigkeitsverhälnis r abhängig ist. Generell nimmt diese Sensitivität mit steigendem r zu, beispielsweise exponentiell. Dementsprechend nimmt in Fig. 7 die Größe der Teilintervalle mit wachsendem r ab.

Zum Trainieren der neuronalen Netze für die einzelnen Teilintervalle A, B, ... ist es nun beispielsweise möglich, Meßwerte $u_i$ zu verwenden, die jeweils für einen Wert r in der Mitte des betreffenden Intervalls gewonnen oder simuliert werden.

In Fig. 8 ist ein alternatives Trainingsverfahren dargestellt, mit dem sich bei vergleichsweise geringer Komplexität des neuronalen Netzes eine größere Robustheit gegenüber Schwankungen des Geschwindigkeitsverhältnisses r erreichen läßt. Wie üblich wird eine bestimmte Menge M an Dickenprofilen benutzt. Diese Menge wird in eine gewisse Anzahl, im gezeigten Beispiel vier, gleich mächtige Mengen $M_a$ - $M_d$ aufgeteilt. Bei der Bestimmung der zugehörigen Meßwerte $u_i$ (durch Simulation oder durch reale Messung) wird nun für jede Teilmenge ein anderes Geschwindigkeitsverhältnis $r_a$, $r_b$, $r_c$, $r_d$ zugrundegelegt. Wie Fig. 7 zeigt, sind diese Geschwindigkeitsverhältnisse $r_a$, $r_b$, $r_c$, $r_d$ gleichmäßig über das Teilintervall B verteilt.

Man erhält auf diese Weise eine Trainingsdatei, bestehend aus Dickenprofilen und zugehörigen Meßwerten $u_i$, in die bereits eine gewisse Schwankung des Geschwindigkeitsverhältnisses r innerhalb des Teilintervalls B "eingebaut" ist. Das mit dieser Trainingsdatei trainierte neuronale Netz 26 ist dann relativ unempfindlich gegenüber Schwankungen des Geschwindigkeitsverhältnisses r innerhalb des Teilintervalls B. Wenn während der Blasfolienherstellung und der Regelung des Dickenprofils das Geschwindigkeitsverhältnis r innerhalb des Teilintervalls B liegt, erhält man mit dem so trainierten neuronalen Netz 26 relativ gute Ergebnisse.

Entsprechend wird auch mit den anderen Teilintervallen A, etc. verfahren, so daß letztlich für jedes in der Praxis vorkommende Geschwindigkeitsverhältnis r ein geeignetes neuronales Netz zur Verfügung steht.

Bei einer Blasfolienanlage, bei der der Abzug 14 ein reversierender Abzug ist, d.h., in einem Winkelbereich von 360° oder weniger abwechselnd in entgegengesetzte Richtungen gedreht wird, kann das mit Hilfe des neuronalen Netzes erhaltene Ergebnis auch davon abhängen, in welcher Richtung sich der Abzug 14 bewegt. Dem kann dadurch Rechnung getragen werden, daß gesonderte neuronale Netze für die beiden entgegengesetzten Drehrichtungen des Abzugs trainiert werden.

**Patentansprüche**

1.  Verfahren zur Messung des Dickenprofils einer in einer Blasfolienanlage mit drehbarem Abzug (14) hergestellten Folie, bei dem

    - ein flachgelegter Folienschlauch (16) abgetastet wird, indem Einzelmessungen an über die Breite des Folienschlauches (16) verteilten Meßpositionen (i) ausgeführt werden und bei jeder Einzelmessung die Gesamtdicke zweier an der Meßposition übereinander liegender Segmente (28) des Folienschlauches gemessen wird, und
    - aus den erhaltenen Meßwerten für eine eine Anzahl von Einzelmessungen, die größer ist als die Anzahl (n) der Meßpositionen, das Dickenprofil (P(j)) berechnet wird,
    **gekennzeichnet durch** die folgenden Schritte:
    - Trainieren eines neuronalen Netzes (26) mit Meßwerten ($u_i$) für die Gesamtdicken, die in simulierten oder realen Meßprozessen mit bekannten Dickenprofilen erhalten werden, und
    - Eingeben der **durch** die Abtastung des Folienschlauches (16) erhaltenen Meßwerte in das neuronale Netz (26) zur Berechnung des Dickenprofils.

2.  Verfahren nach Anspruch 1, bei dem die Anzahl (s) der zur Berechnung eines einzelnen Dickenprofils in das neuronale Netz (26) eingegebenen Meßwerte mindestens das Zweifache der Anzahl (n) der Meßpositionen beträgt.

3.  Verfahren nach Anspruch 1 oder 2, bei dem daß das neuronale Netz (26) drei Schichten von Neuronen (30, 32, 34) aufweist.

4.  Verfahren nach Anspruch 3, bei dem die Anzahl der Neuronen (32) in der mittleren Schicht des neuronalen Netzes (28) gleich der Anzahl (2n) der Segmente (28) des Folienschlauches ist und jedem Segment genau ein Neuron (32) der mittleren Schicht zugeordnet ist.

5.  Verfahren nach einem der vorstehenden Ansprüche, bei dem zum Trainieren des neuronalen Netzes Meßwerte ($u_i$) verwendet werden, die mit der Meßapparatur (22), mit der das Verfahren ausgeführt wird, zuvor an einem oder mehreren realen Folienschläuchen (16) gemessen wurden, und daß zum Trainieren Dickenprofile verwendet werden, die nach Auftrennen dieser Folienschläuche an der einlagigen Folie gemessen wurden.

6.  Verfahren nach einem der vorstehenden Ansprüche, bei dem zum Trainieren des neuronalen Netzes eine Menge (M) von Dickenprofilen in mehrere Teilmengen ($M_a$ - $M_d$) aufgeteilt wird, für die die zu den einzelnen Dickenprofilen gehörenden Meßwerte ($u_i$) unter der Bedingung bestimmt werden, daß das Verhältnis r zwischen der Dauer ($T_F$) einer einzelnen Drehung des Abzugs (14) und der Dauer ($T_M$) einer einzelnen Abtastung des Folienschlauches (16) Werte ($r_a$ - $r_d$) hat, die innerhalb jeder Teilmenge gleich aber von Teilmenge zu Teilmenge verschieden sind, und daß zum Trainieren des neuronalen Netzes die Gesamtheit der Dickenprofile und Meßwerte aller Teilmengen benutzt wird.

7.  Verfahren nach einem der Ansprüche 1 bis 5, bei dem Betriebsparameter der Blasfolienanlage, wie z. B. die Dauer ($T_F$) einer einzelnen Drehung des Abzugs (14) und/oder die Dauer ($T_M$) einer einzelnen Abtastung des Folienschlauches (16) oder das Verhältnis (r) dieser Dauern, als Eingangsgrößen in entsprechede Eingangsneuronen eines einheitlichen Netzes eingegeben werden, das für verschiedene Parameter oder Parameterkombinationen trainiert wurde.

8.  Verfahren nach einem der vorstehenden Ansprüche, bei dem für Meßbedingungen, die sich hinsichtlich des Verhältnisses r zwischen der Dauer ($T_F$) einer einzelnen Drehung des Abzugs (14) und der Dauer ($T_M$) einer einzelnen Abtastung des Folienschlauches (16) unterscheiden, mehrere neuronale Netze trainiert werden oder im Fall des Anspruchs 7 das einheitliche Netz mit unterschiedlichen Parametern trainiert wird, jeweils für ein Teilintervall (A, B) des Wertebereiches, innerhalb dessen der Wert r variiert, und daß die Größe der einzelnen Teilintervalle (A, B) von der Größe des Wertes r abhängig ist.

9. Vorrichtung zur Messung des Dickenprofils in einer Blasfolienanlage, die einen drehbaren Abzug (14) für einen Folienschlauch (16) und eine Einrichtung zum Flachlegen des Folienschlauches aufweist, mit einer Meßstation (22) zur Abtastung des flachgelegten Folienschlauches (16) mit einem über die Breite des Folienschlauches verfahrbaren Meßkopf (24), der dazu eingerichtet ist, an mehreren über die Breite des Folienschlauches verteilten Positionen jeweils die Gesamtdicke zweier an dieser Meßposition übereinanderliegender Segmente (28) des Folienschlauches zu messen, und mit einer Einrichtung zur Berechnung des Dickenprofils aus den erhaltenen Meßwerten, **dadurch gekennzeichnet, daß** die Einrichtung zur Berechnung des Dickenprofils ein neuronales Netz (26) ist.

## Fig. 1

*Fig. 2*

| 1 | 2 | 3 | ••• | i-1 | i | i+1 | ••• | n-1 | n |

*16*

| 1 | 2 | 3 | | j-1 | j | j+1 | | n-1 | n |

•••

•••

*28*

| 2n | 2n-1 | 2n-2 | | 2n+2-j | 2n+1-j | 2n-j | | n+2 | n+1 |

*24*

*Fig. 3*

| 1 | 2 | 3 | ••• | i-1 | i | i+1 | ••• | n-1 | n |

*16*

| 1-k | 2-k | 3-k | | j-1-k | j-k · | j+1-k | | n-1-k | n-k |

•••

•••

| -k | -1-k | -2-k | | 2-j-k | 1-j-k | -j-k | | n+2-k | n+1-k |

*24*

*Fig. 4*

*Fig. 5*

*Fig. 6*

*Fig. 7*

*Fig. 8*

**Europäisches**
**Patentamt**

# EUROPÄISCHER RECHERCHENBERICHT

**Nummer der Anmeldung**

EP 08 00 9910

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | EP 1 207 368 A (ELECTRONIC SYSTEMS SPA [IT]) 22. Mai 2002 (2002-05-22) <br> * Zusammenfassung; Abbildungen 1,2 * <br> * Spalte 3 - Spalte 5 * <br> ----- | 1-9 | INV. <br> G01B21/08 |
| Y | DE 100 38 816 A1 (ABB PATENT GMBH [DE]) 13. Juni 2002 (2002-06-13) <br> * Zusammenfassung; Abbildung 1 * <br> * Spalte 1 * <br> * Spalte 3 - Spalte 4 * <br> ----- | 1-9 | |
| A | DE 44 33 772 A1 (MICRO EPSILON MESSTECHNIK [DE]) 28. März 1996 (1996-03-28) <br> * Zusammenfassung; Abbildung 1 * <br> ----- | 1-9 | |

**RECHERCHIERTE SACHGEBIETE (IPC)**

G01B
B29C

Der vorliegende Recherchenbericht wurde für alle Patentansprüche erstellt

| Recherchenort | Abschlußdatum der Recherche | Prüfer |
|---|---|---|
| Berlin | 5. September 2008 | Vorropoulos, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 00 9910

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2008

| Im Recherchenbericht angeführtes Patentdokument | Datum der Veröffentlichung | Mitglied(er) der Patentfamilie | Datum der Veröffentlichung |
|---|---|---|---|
| EP 1207368 A | 22-05-2002 | DE 60131059 T2<br>ES 2295099 T3<br>IT MI20002451 A1 | 24-07-2008<br>16-04-2008<br>15-05-2002 |
| DE 10038816 A1 | 13-06-2002 | KEINE | |
| DE 4433772 A1 | 28-03-1996 | WO 9609516 A1<br>EP 0782692 A1<br>JP 2969534 B2<br>JP 10500218 T<br>US 5898304 A | 28-03-1996<br>09-07-1997<br>02-11-1999<br>06-01-1998<br>27-04-1999 |

EPO FORM P0461

Für nähere Einzelheiten zu diesem Anhang : siehe Amtsblatt des Europäischen Patentamts, Nr.12/82

**EP 2 128 563 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1207368 A2